Europäisches Patentamt

(19) European Patent Office

Office européen des brevets

(11) Veröffentlichungsnummer: **0 010 752**
A1

# (12) EUROPÄISCHE PATENTANMELDUNG

(21) Anmeldenummer: 79104187.4

(22) Anmeldetag: 29.10.79

(51) Int. Cl.³: **C 08 J 3/20, C 08 L 23/00**

(30) Priorität: 02.11.78 DE 2847424

(43) Veröffentlichungstag der Anmeldung: 14.05.80
Patentblatt 80/10

(84) Benannte Vertragsstaaten: **AT DE IT**

(71) Anmelder: **HOECHST AKTIENGESELLSCHAFT,
Zentrale Patentabteilung Postfach 80 03 20, D-6230
Frankfurt/Main 80 (DE)**

(72) Erfinder: **Mayer, Manfred, Dr., Königsberger Strasse 8,
D-6272 Niedernhausen/Taunus (DE)**
Erfinder: **Nöltner, Gerhard, Sossenheimer Weg 33a,
D-6230 Frankfurt am Main 80 (DE)**
Erfinder: **Nowack, Rudolf, Dr., Westenberger
Strasse 34, D-6230 Frankfurt am Main 80 (DE)**
Erfinder: **Pense, Rolf, Dr., Behringstrasse 38, D-6233
Kelkheim (Taunus) (DE)**

(54) **Verfahren zum Einmischen von Zusätzen in Polyolefinpulver.**

(57) Um Schädigungen bei der Verarbeitung zu vermeiden und/oder Verarbeitungs- und Gebrauchseigenschaften von Polyolefinpulvern zu verbessern, werden diese Pulver mit Zusätzen gleichmäßig vermischt. Dieses gleichmäßige Mischen wird dadurch erreicht, daß man Polyolefinpulver und Zusätze mit einer Leistung von 370 bis 1280 Wh/m³ Pulver mittels rotierender Messer mit einer Messerfolgefrequenz von 100 bis 300 pro sec. mischt. Dabei soll das Pulver durch eine Zone mit einer Energiedissipationsdichte von 200 bis 350 W/l Mischervolumen geführt werden.

0010752

- 1 -

HOECHST AKTIENGESELLSCHAFT     HOE 78/F 237     D.Ph.HS/sch

Verfahren zum Einmischen von Zusätzen in Polyolefinpulver

Gegenstand der Erfindung ist ein Verfahren zum kontinuierlichen, gleichmäßigen Vermischen von Polyolefinpulver mit
Zusätzen.

Polyolefinpulver werden beim Verarbeiten in einem Maße beansprucht, daß es notwendig wird, dem Pulver Zusätze wie z.B.
Stabilisatoren, Gleitmittel, Weichmacher, Flammschutzmittel,
Antistatika, Farbstoff usw. beizumischen, um unerwünschte
Schädigungen zu vermeiden und/oder Verarbeitungs- bzw.
Gebrauchseigenschaften zu verbessern. Derartige Zusätze
werden einzeln oder in Mischungen nur in sehr geringen Mengen, z.B. zwischen 0,04 und 2 Gew.-%, bezogen auf das Polyolefinpulver dem Polyolefinpulver beigegeben. Dabei sollen
die Zusätze im Pulver gleichmäßig verteilt sein.

Es sind Methoden zum Einmischen von Zusätzen im Polyolefinpulver bekannt, die jedoch keine befriedigenden Resultate
im Mischergebnis liefern und einen zu großen technischen und
energetischen Aufwand erfordern.

Nach einem Verfahren werden die Zusätze dem pneumatisch
geförderten Massenstrom von Polyolefinpulver beigegeben und
während der pneumatischen Förderung mit dem Pulver gemischt.
Mit diesem Verfahren können nur unbefriedigende Mischergebnisse

erzielt werden. Die dabei auftretende große Ungleichverteilung der Zusätze im Polyolefinpulver führt zu Ausschuß beim Weiterverarbeiten des Pulvers.

Um eine bessere Verteilung der Zusätze im Pulver zu erreichen werden nach einem anderen Verfahren die Zusätze zu einer wässrigen Paste verarbeitet und auf das Polyolefinpulver gesprüht, das anschließend durch einen thermischen Verfahrensschritt wieder getrocknet werden muß.

Die Aufgabe zu vorliegender Erfindung besteht demnach darin, ein Verfahren zu schaffen, das ein homogenes Vermischen von Polyolefinpulver mit Zusätzen gewährleistet und mit dem die vorstehenden Nachteile vermieden werden.

Die Aufgabe wird durch ein Verfahren gelöst, das dadurch gekennzeichnet ist, daß man das Polyolefinpulver und die Zusätze mit einer Leistung von 370 bis 1280 Wh/m³, vorzugsweise 400 - 500 Wh/m³ Pulver mittels rotierender Messer mit einer Messerfolgefrequenz von 100 - 300 pro sec., vorzugsweise von 250 - 300 pro sec. mischt und dabei das Pulver durch eine Zone mit einer Energiedissipationsdichte von 200 - 350 W/l Mischervolumen führt.

Das Verfahren arbeitet also mit einer Volumenstromdichte von 30 - 300 m³/m²h Polyolefinpulver. Mit dem erfindungsgemäßen Verfahren ist es möglich, geringe Mengen von Zusätzen mit einem vergleichsweise großen Massestrom von Polyolefinpulver homogen zu vermischen. Dem aus dem Trockner kommenden Polyolefinmassestrom wird kurz vor Eintritt des Pulvers in einen kontinuierlich arbeitenden Mischer der Zusatz aufgegeben. Das Gemisch durchläuft Zonen hoher Energiedissipationsdichte; alle Teilchen müssen zwangsweise durch die Felder hoher Scherintensität durchtreten. Diese Felder hoher Scherintensität können von schnell rotierenden Messerköpfen erzeugt werden, die innerhalb eines Mischrohres auf einer sich drehenden koaxial zum Mischrohr angebrachten Welle sitzen und mit ihren Messerenden bis zur Rohrwand reichen und von dieser durch einen kleinen Spalt getrennt sind. Um eine gute Durchmischung zu erreichen, sind ein bis drei, vorzugsweise drei Messerköpfe, die auf der Welle hintereinander angeordnet sind, ausreichend. Die Messerköpfe können mehrere Messer, vorzugsweise sechs aufweisen, die am Kopf unterschiedlich zur Durchlaufrichtung angestellt sein können. Die hohe Energiedissipationsdichte verbunden mit einer großen Mischintensität führt zu einer gleichmäßigen Verteilung der Zusätze auf dem Pulverstrom. Auch Zusätze mit niedrigem Schmelzpunkt können mit diesem Verfahren ohne Klumpenbildung bei bester Verteilung mit heißem Polyolefinpulver vermischt werden.

Beispiel:

In einem senkrecht stehenden Mischer mit 100 mm Rohrdurchmesser und 400 mm Höhe wurden kontinuierlich 750 kg/h Polyäthylenpulver mit einer Temperatur von 98°C mit 2,7 kg/h Stabilisator mit einer Temperatur von 20°C gemischt. Der eingesetzte Stabilisator hat einen Schmelzpunkt von 41°C. Das Polyäthylenpulver wurde mit einer Dosierschnecke dem Mischer aufgegeben. Der Stabilisator wurde mit einer gravimetrisch arbeitenden Dosierwaage auf den Polyäthylenstrom dosiert. Auf der Mischerwelle waren drei Messerköpfe mit je sechs Messer angebracht, die mit einer Messerfolgefrequenz von 300 pro sec. rotierten. Die zum Mischen aufgewendete Leistung betrug 0,8 kW. Der aus dem Mischer mit dem Stabilisator vermengte, ablaufende Polyäthylenstrom hatte eine Temperatur von 92°C, war einwandfrei rieselfähig und wies keinerlei Klumpen auf. Der Stabilisator war homogen im Pulver verteilt.

Die Verteilung des Stabilisators im Polyäthylenpulver wurde wie folgt festgestellt:
Das stabilisierte Polyäthylenpulver wird in dünner Schicht auf einerAluminiumfolie 3 Stunden bei 200°C in einem Isoofen erhitzt. Die dabei auftretende Braunfärbung ist ein Maßstab für die Verteilung. Eine homogene Stabilisatorverteilung erkennt man an einer gleichmäßigen Braunfärbung des

- 4 -    0010752

Probenstückes. Bei schlechter Verteilung erscheinen die grobkörnigen Stabilisatorteilchen als weiße, nicht oxidierte Krater auf dem braunen anoxidierten Untergrund.

PATENTANSPRÜCHE:

1. Verfahren zum kontinuierlichen, gleichmäßigen Vermischen von Polyolefinpulver mit Zusätzen, dadurch gekennzeichnet, daß man das Pulver und die Zusätze mit einer Leistung von 370 bis 1280 Wh/m³, vorzugsweise von 400 bis 500 Wh/m³ Pulver mittels rotierender Messer mit einer Messerfolgefrequenz von 100 bis 300 pro sec., vorzugsweise von 250 bis 300 pro sec. mischt und dabei das Pulver durch eine Zone mit einer Energiedissipationsdichte von 200 bis 350 W/l Mischervolumen führt.

2. Verfahren nach Anspruch 1, dadurch gekennzeichnet, daß das Polyolefinpulver mit Stabilisatoren bei einer Temperatur vermischt wird, die über dem Schmelzpunkt der Stabilisatoren liegt.

| EINSCHLÄGIGE DOKUMENTE | | | KLASSIFIKATION DER ANMELDUNG (Int.Cl.) 3 |
|---|---|---|---|
| Kategorie | Kennzeichnung des Dokuments mit Angabe, soweit erforderlich, der maßgeblichen Teile | betrifft Anspruch | |
| | US - A - 3 969 314 (GRIGULL) + Fig. 1,2; Spalte 3, 4. Absatz + -- | 1 | C 08 J 3/20 C 08 L 23/00 |
| A | GB - A - 1 478 741 (KABEL- UND METALLWERKE) -- | | |
| A | GB - A - 1 443 461 (GENERAL ELECTRIC CO.) + Beispiele 1-3 + -- | | RECHERCHIERTE SACHGEBIETE (Int.. Cl.) 3 |
| A | GB - A - 1 390 100 (IMPERIAL CHEMICAL INDUSTRIES) + Beispiele 1-4 + ---- | | C 08 J C 08 K C 08 L |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 04-02-1980 | DICHER |